# EUROPEAN PATENT APPLICATION

(11) **EP 1 803 530 A2**
(43) Date of publication of application: **04.07.2007**
(21) Application number: 06256563.5
(22) Date of filing: 22.12.2006
(51) Int. Cl.: B23Q 15/24

(54) **Tool displacement controlling and correcting device for machine tool**

(30) Priority: 27.12.2005 JP 2005375553
(71) Applicant: FANUC LTD, Minamitsuru-gun, Yamanashi 401-0597 (JP)
(72) Inventor: Kawai, Tomohiko, Minamitsuru-gun, Yamanashi, 401-0304 (JP); Ebihara, Kenzo, c/o FANUC Dai3virakaramatsu, Minamitsuru-gun, Yamanashi, 401-0511 (JP); Ooki, Takeshi, c/o FANUC Dai3virakaramatsu, Minamitsuru-gun, Yamanashi, 401-0511 (JP)
(74) Representative: Billington, Lawrence Emlyn

(57) **Abstract**

A controller for a machine tool, capable of performing ultraprecision machining with high accuracy by performing correction allowing for a displacement of a spindle produced depending on a rotational speed. When the spindle is rotated at high speed, the cutting position of a tool attached to the spindle varies due to the influence of spindle fitting accuracy and of weight balance. By measuring the displacements in the X, Y and Z directions of the end of the tool (2) attached to the spindle (1) by means of non-contact displacement gauges (6x,6y,6z), correction amounts are obtained in the manner associated with the rotational speed of the spindle, and stored in a storage device. In the process of machining, correction amounts are read depending on the speed of the spindle, and machining is performed according to program command values corrected using the correction amounts thus read. Even if the cutting position of the tool varies during high-speed rotation, machining is performed according to program command values corrected. Thus, ultraprecision machining can be carried out with high accuracy.

## Description

### BACKGROUND OF THE INVENTION

### 1. Field of the Invention

The present invention relates to a controller for an ultraprecision machine tool, and particularly to a cutting-edge position correction to be performed when a rotation axis is rotated at high speed.

### 2. Description of Related Art

A tool wears when it continues to be used. If machining is continued disregarding the wear of the tool, the accuracy of machining lowers. Thus, in the prior art, a method in which the diameter of the tool and/or the position of the end face of the tool are measured, a tool correction amount is obtained, and a set value for the tool diameter and machining conditions are corrected is adopted.

In order to measure the tool diameter and the tool end-face position, a method in which measurement is performed with the rotation of the tool stopped, or a method in which measurement is performed with the tool kept rotating is adopted.

For example, there is known an invention in which, with a spindle kept rotating, a radius value X0 of a reference tool attached to the spindle and a radius value x0 of a machining tool attached to the spindle are detected using a non-contact detector and stored; after performing a predetermined number of units of machining, with the spindle kept rotating, a radius value Xi of the reference tool and a radius value xi of the machining tool are measured; then the difference between the radius value of the reference tool detected before machining and that detected after machining AXi = Xi-X0 and the difference between the radius value of the machining tool detected before machining and that detected after machining Axi = xi-x0 are obtained; then, from these two detected-radius-value differences, a tool wear quantity ATi = Axi-AXi is obtained; and by comparing a cumulative value AS of the tool wear quantity with a tool-life criterial value a, a tool correction value is supplied (see JP 63-50140B).

There is also known an invention in which rotational run-out of a cutting tool is measured with a probe of a measurement instrument in contact with the circumferential face of the cutting tool; replacement of the cutting tool is repeated until the measured value lowers to be equal to or less than a threshold value; and when it lowers to be equal to or less than the threshold value, machining is performed. The probe of the measurement instrument is periodically brought into contact with the circumferential face and end face of the cutting tool to detect wear, and the machining conditions are changed or the tool life is determined depending on the amount of wear detected (see JP 2843488B).

There is also known a method in which a correction value is obtained by detecting variations in cutting position in one rotation of a tool. For example, JP 3162936B discloses an invention in which by rotating an end mill at low speed with an X-axis sensor in contact with the circumferential face of the end mill, a maximum run-out is obtained and then an X-axis correction value based on the maximum run-out is obtained; and by rotating the end mill at low speed with a Z-axis sensor in contact with the end face of the end mill, a maximum run-out is obtained and then a Z-axis correction value based on the maximum run-out is obtained.

As mentioned above, in the prior art, the purpose of measuring the tool diameter or the like and performing the tool-diameter correction is to prevent the lowering of the machining accuracy due to the change in tool diameter due to the wear of the tool. Further, in the invention described in JP 3162936B, the tool diameter or the like is measured for the purpose of performing correction allowing for the run-out within one rotation of the tool or errors in tool attachment.

Meanwhile, in a machine tool performing ultraprecision machining, when machining is performed with a tool or a workpiece attached to a spindle which is rotated at high speed, the cutting position varies not due to the wear of the tool or run-out within one rotation.

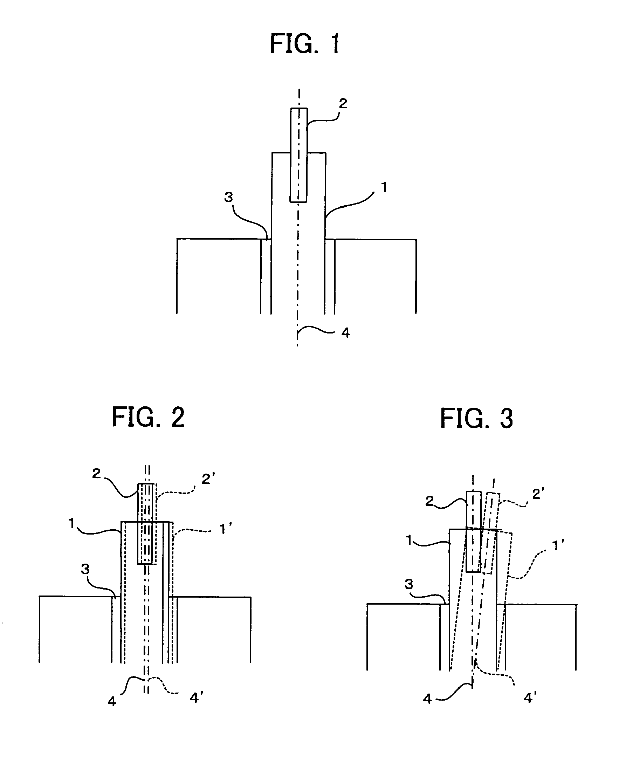

FIGS. 1 to 3 are diagrams for explaining such variation caused when the spindle is rotated at high speed. In FIGS. 1 to 3, a spindle 1 is rotatably supported by a bearing 3, and a tool or a workpiece is attached to the spindle 1. FIGS. 1 to 3 relates to an example in which a tool 2 is attached. As shown in FIG. 1, in a state that the spindle 1 is not rotating, the central axis of the tool 2 agrees with the central axis 4 of the spindle 1. When the spindle is rotated at high speed, however, the central axis 4 of the spindle 1 is displaced as shown in broken line and indicated by reference sign 4' in FIG. 2 (the spindle and tool thus displaced are indicated by reference signs 1' and 2', respectively), or the spindle 1 becomes inclined and a run-out is produced as shown in broken line in FIG. 3, so that the radial-direction position and thrust-direction position of the tool vary, so that the position of the cutting edge varies.

Such displacement of the tool or workpiece attached to the high-speed rotation axe during high-speed rotation is due to the influence of the accuracy of fitting of the spindle (rotation axis) and of the weight balance of the spindle (rotation axis), which influence appears in high-speed rotation.

In the prior art, the measurement of the displacement of the spindle (displacement of the tool or workpiece) in high-speed rotation is performed in a manner such that, if a workpiece in the shape of a cylinder is attached to the rotation axis, a sensor or the like is brought into contact with the rotating face of the cylinder.

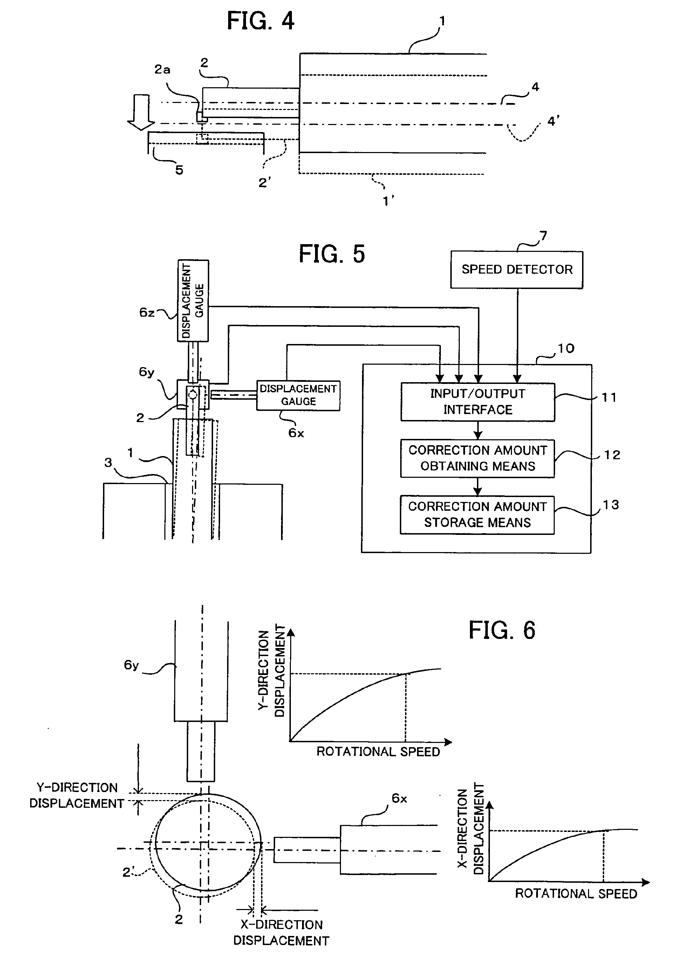

If a tool is attached to the spindle (rotation axis), the displacement of the rotation axis (spindle 1) in rotation is measured from the position of the cutting edge 2a of the tool 2 made to cut into the workpiece 5 as shown in FIG. 4.

In this method, however, measuring the displacement of the spindle (rotation axis) in high-speed rotation is difficult work. Further, the inventors of this application found out that the amount of displacement of the tool, workpiece or the like attached to the rotation axis (spindle) varies depending on the rotational speed of the rotation axis (spindle). Thus, in order to perform machining with high accuracy, correction needs to be performed allowing for the amount of displacement of the tool, workpiece or the like depending on the rotational speed.

### SUMMARY OF THE INVENTION

The present invention provides a controller capable of performing ultraprecision machining with high accuracy by correcting displacements of a spindle in accordance with a rotational speed of the spindle.

A controller of the present invention controls a machine tool having a spindle to which a tool or a workpiece is attached to be rotated. The controller comprises: a measuring device for measuring displacements of the tool or the workpiece attached to the spindle and in rotation, in at least one of a thrust direction and a radial direction using a non-contact displacement gauge from a stationary state to a maximum-speed rotating state of the spindle; a storage device for storing correction amounts for different rotational speeds of the spindle, determined based on the displacements measured at different rotational speeds of the spindle by the measuring device; and correction means for correcting commands in a machining program for the machine tool using the correction amounts stored in the storage device in accordance with the rotational speed of the spindle.

The measuring device may measure the displacements in directions of feed axes for moving the tool relative to the workpiece, so that correction amounts in the directions of feed axes are determined and stored in the storage device.

With the above configuration, even when a tool or a workpiece displaces in high speed rotation, the displacement of the tool or the workpiece is compensated in the machining to achieve ultraprecision machining with high accuracy.

### BRIEF DESCRIPTION OF THE DRAWINGS

FIG. 1 is a diagram showing a state that the rotation of a spindle is stopped,
FIG. 2 is a diagram showing a state that the spindle is rotating at high speed so that the center of rotation is displaced,
FIG. 3 is a diagram showing a state that the spindle is rotating at high speed so that the spindle is inclined and a run-out is produced,
FIG. 4 is a diagram for explaining a conventional measurement method for measuring the displacement of a tool attached to a spindle produced when the spindle is rotating at high speed,
FIG. 5 is a functional block diagram of an embodiment of controller for a machine tool according to the present invention, when it obtains correction amounts, and a diagram showing the arrangement of non-contact displacement gauges relative to a tool, viewed from an angle perpendicular to the axis of a spindle,
FIG. 6 is a diagram showing the arrangement of non-contact displacement gauges relative to a tool in one embodiment of the present invention, viewed in an axial direction of the spindle,
FIG. 7 is a functional block diagram of the same embodiment of controller for the machine tool, when it performs machining, performing correction in response to a displacement of the spindle produced in high-speed rotation,
FIG. 8 is a flowchart showing a procedure for obtaining correction amounts, performed by the same embodiment of controller for the machine tool,
FIG. 9 is a flowchart showing a procedure for performing machining, performed by the same embodiment of controller for the machine tool, and
FIG. 10 is a diagram showing a case in which the present invention is applied to machining of a Fresnel lens.

### DETAILED DESCRIPTION

FIG. 5 is a schematic block diagram showing a structure for obtaining correction amounts for allowing for a displacement of an rotating object such as a tool or a workpiece attached to a spindle, which accompanies a displacement and/or a run-out of the spindle produced when the spindle is rotating at high speed, in an embodiment of the present invention. In this embodiment, the rotating object attached to the spindle is a tool.

In connection with the present invention, a controller 10 such as a numerical controller for controlling a machine tool includes a correction amount obtaining means 12 and a correction amount storage means 13 for storing the correction amounts obtained.

When correction amounts are to be obtained, non-contact displacement gauges for measuring an X-axis direction displacement, a Y-axis direction displacement and a Z-axis direction displacement are disposed around a tool 2, in alignment with the X-axis direction, Y-axis direction and Z-axis direction for feed axes for moving the tool relatively to a workpiece. First, relative to the tool 2 (or a workpiece) attached to a spindle 1 rotatably supported by a bearing 3, respective sensor parts of non-contact displacement gauges 6x, 6y are disposed close to the circumferential face of the end part of the tool, for detecting an X-axis direction displacement and a Y-axis direction displacement (variation in position of the circumferential face), where the X-axis direction and the Y-axis direction are radial directions for the tool 2 when the spindle 1 is rotated, and cross each other at right angles. Further, a sensor part of a non-contact displacement gauge 6z for detecting a thrust-direction (Z-axis direction) displacement of the tool 2 (variation in position of the end face of the tool) is disposed close to the end face of the tool 2.

FIG. 5 shows the relation between the tool 2 and the non-contact displacement gauges 6x, 6y, 6z, as viewed in the Y-axis direction. FIG. 6 shows the relation between the tool 2 and the non-contact displacement gauges 6x, 6y, as viewed in the Z-axis direction. As shown in FIG. 6, depending on the rotational speed of the spindle (rotation axis) (the rotational speed of the tool), the radial (X-axis direction, Y-axis direction) displacements εx, εy of the tool 2 vary, so that the cutting edge position varies. Although not shown, the thrust-direction (Z-axis direction) displacement εz, namely the amount of variation of the end-face position of the tool 2 also varies depending on the rotational speed. These displacements εx, εy, εz are measured by the non-contact displacement gauges 6x, 6y, 6z.

The controller 10 such as a numerical controller for controlling a machine tool and the non-contact displacement gauges 6x, 6y, 6z are connected by an input/output interface 11. Further, a speed detector 7 for detecting the rotational speed of the spindle is connected with the controller 10 by the input/output device in the conventional manner.

Thus, the controller 10 makes the spindle 1 and tool 2 rotate by successively changing a speed command for giving a specified speed to a spindle motor (not shown) for driving the spindle 1, without placing a burden on the spindle 1. The correction amount obtaining means 12 obtains the displacements detected by the displacement gauges 6x, 6y, 6z at each rotational speed, through the input/output interface 11, obtains correction amounts and stores the correction amounts in the correction amount storage means 13 in the manner associated with the speed detected by the speed detector 7 and supplied through the input/output interface 11.

Thus, in the correction amount storage means 13, the radial (X-axis direction, Y-axis direction) correction amounts and thrust-direction (Z-axis direction) correction amount for the tool 2 are stored in the manner associated with the rotational speed of the spindle 1.

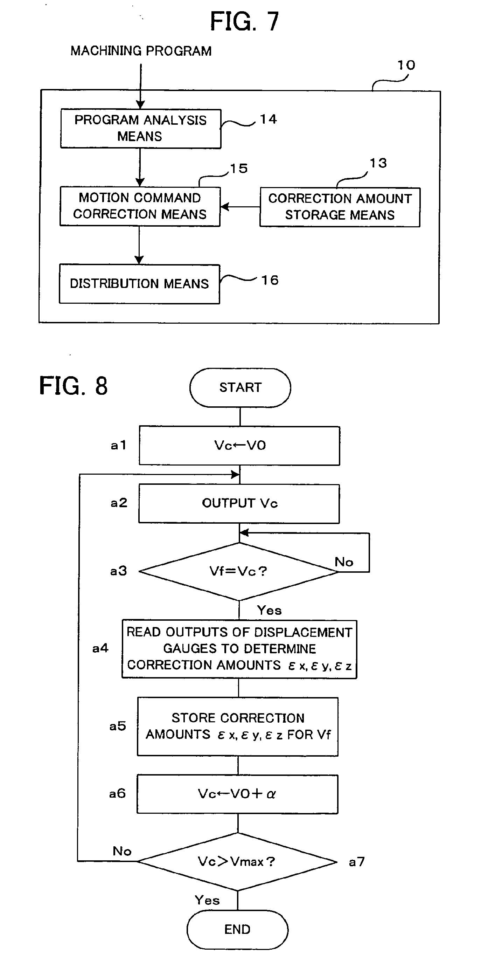

FIG. 7 is a functional block diagram of the controller 10 when it performs machining. As compared with the conventional numerical controller, the controller 10 is different in that a motion command correction means 15 is provided.

A program analysis means 14 analyses a machining program and generates execution data. The motion command correction means 15 reads a correction amount corresponding to a speed of the spindle 1 given by the command, from the correction amount storage means 13 and corrects a motion command specified in the program. A distribution means 16 performs distribution of the corrected motion command and supplies the resultant commands to servo control sections for the individual axes.

FIG. 8 is a flowchart showing a procedure for obtaining correction amounts, which is performed by a processor of the controller 10 and corresponds to the functional block diagram of FIG. 5.

In a state where the spindle 1 has no burden placed on, the non-contact displacement gauges 6x, 6y, 6z are disposed around the tool as shown in FIGS. 5 and 6, and a correction-quantity obtain command is given to the controller 10. The processor of the controller 10 first sets a speed command Vc for the spindle to an initial speed V0 (Step a1), outputs the speed command to a spindle control circuit to make the spindle rotate at the speed specified by the speed command Vc (Step a2). The processor waits until a speed feedback value Vf fed from the speed detector 7 for detecting the speed of the spindle reaches the specified speed Vc (Step a3). When the speed feedback value Vf reaches the specified speed Vc, the processor reads the outputs of the non-contact displacement gauges 6x, 6y, 6z, calculates correction amounts εx, εy, εz (Step a4), and stores the present speed Vf = Vc and the correction amounts εx, εy, εz to be associated with the present speed in the storing means (Step a5).

Then, the processor increases the speed command Vc by a predetermined increment α (Step a6) and determines whether or not the speed command Vc increased exceeds the maximum value Vmax to which the speed command is allowed to be set (Step a7). If not, the processor returns to Step a2 and performs Step a2 and succeeding steps. Thus, at each spindle speed, correction amounts εx, εy, εz for that spindle speed are stored in the storing means. When the speed command Vc exceeds the maximum speed Vmax, the processor ends the processing.

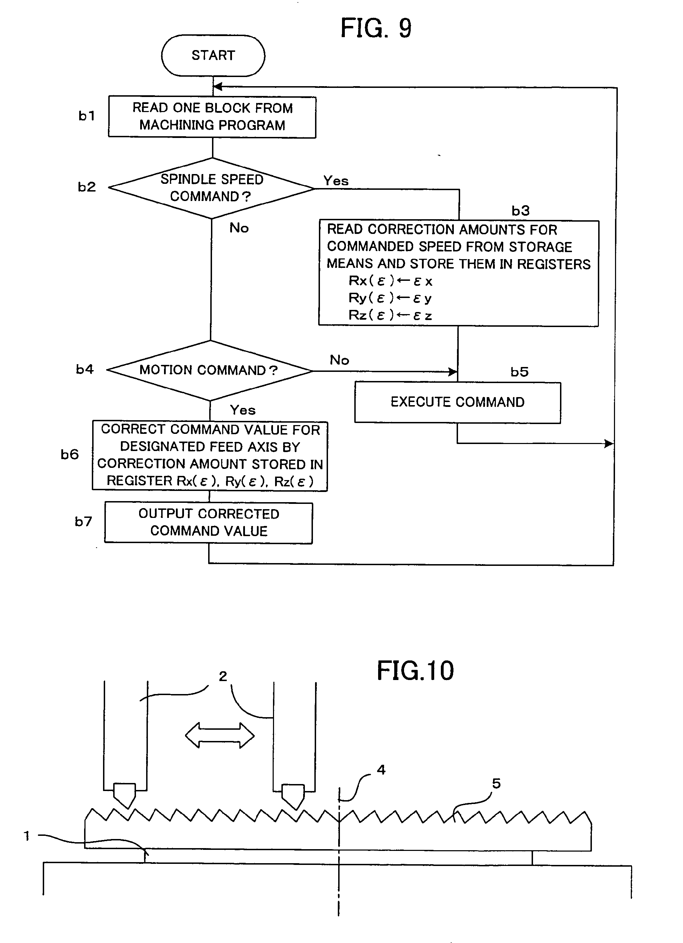

FIG. 9 is a flowchart showing a procedure for performing machining by correcting a motion command using the correction amounts, performed by the controller.

The processor of the controller 10 reads one block from a machining program (Step b1), and determines whether the block contains a spindle speed command or not (Step b2). If a spindle speed command is contained, the processor reads correction amounts εx, εy, εz corresponding to the spindle speed specified by the command, from the storing means, stores them in registers R(x), R(y), R(z) (Step b3), executes the command in the block, containing the spindle speed command, in the conventional manner (Step b5), and then returns to Step b1.

If the block read does not contain a spindle speed command, the processor goes to Step b4 and determines whether the command in the block is a motion command or not (Step b4). If the command in the block is not a motion command, the processor executes the command in the block in the conventional manner (Step b5), and then returns to Step b1.

If the command in the block is a motion command, the processor corrects motion a command value for the X, Y or Z axis specified by the motion command based on the correction amount εx, εy, εz stored in the register R(x), R(y), R(z) (Step b6), outputs and distributes the corrected command value and returns to Step S1. If the spindle speed corresponding to the current spindle speed is not stored in the storing device, the correction amounts corresponding to the current spindle speed are obtained by interpolation based on the correction amounts at those spindle speeds which are stored in the storing means and have the current spindle speed between them, and the command values are corrected using the correction amounts thus obtained.

The processing described above is executed until a program end command is read.

As seen from the above, when the spindle speed command is changed, the correction amounts εx, εy, εz corresponding to the changed spindle speed command are stored in the registers R(x), R(y), R(z), and the respective motion command values are corrected on the basis of the correction amounts εx, εy, εz stored. By performing correction allowing for a variation in cutting position due to the displacement and/or run-out of the spindle and tool this way, machining can be carried out with high accuracy.

Although the above-described embodiment is arranged such that motion commands to be given are corrected in the process of machining, it can be arranged such that a machining program is read to correct motion commands using correction amounts, without performing machining, thereby obtaining a corrected machining program.

Further, the above-described embodiment is an example in which displacements in three axis directions, namely in the X-, Y- and Z-axis directions are measured to obtain correction amounts, and machining is performed by correcting motion commands on the basis of correction amounts thus obtained. However, in the machining in which the tool moves relatively to the workpiece in only one direction or in only two directions, only a movement quantity in the direction of the movement needs to be corrected by obtaining only a correction amount in the direction of the movement.

Further, although the above-described embodiment is an example in which machining is performed with a tool attached to a spindle as a rotation axis (milling etc.), the present invention can be applied also to lathe machining in which machining is performed with a workpiece attached to the spindle.

For example, as shown in FIG. 10, the present invention is optimal for machining of a Fresnel lens, etc. In FIG. 10, a workpiece 5 for forming a Fresnel lens is attached to a spindle 1, and when the spindle 1 rotates, also the workpiece 5 rotates. Machining on the end face of the workpiece is performed by making a tool 2 cut into the workpiece in the axial direction of the spindle (Z-axis direction). By moving the tool 2 in the X- or Y-axis direction which crosses the Z-axis direction at right angles, grooves are formed in the end face of the workpiece 5 so that the workpiece is made into a Fresnel lens. In this case, by correcting motion commands for the Z-axis and the X- or Y-axis of the tool 2 depending on the rotational speed of the spindle 1 (workpiece 5), the Fresnel lens can be machined with high accuracy.

## Claims

1. A controller for controlling a machine tool having a spindle to which a tool or a workpiece is attached to be rotated, comprising:
a measuring device for measuring displacements of the tool or the workpiece attached to the spindle and in rotation, in at least one of a thrust direction and a radial direction using a non-contact displacement gauge from a stationary state to a maximum-speed rotating state of the spindle;
a storage device for storing correction amounts for different rotational speeds of the spindle, determined based on the displacements measured at different rotational speeds of the spindle by said measuring device; and
correction means for correcting commands in a machining program for the machine tool using the correction amounts stored in said storage device in accordance with the rotational speed of the spindle.

2. A controller for a machine tool according to claim 1, wherein said measuring device measures the displacements in directions of feed axes for moving the tool relative to the workpiece, so that correction amounts in the directions of feed axes are determined and stored in said storage device.
